# EUROPEAN PATENT APPLICATION

(11) **EP 2 416 545 A1**
(43) Date of publication of application: **08.02.2012**
(21) Application number: 10758358.5
(22) Date of filing: 03.03.2010
(51) Int. Cl.: H04M 1/64, H04W 68/00

(54) **MOBILE PHONE**

(30) Priority: 02.04.2009 JP 2009090110
(71) Applicant: NEC Corporation, Tokyo 108-8001 (JP)
(72) Inventor: KATO, Eriko, Tokyo 108-8001 (JP)
(74) Representative: Glawe, Delfs, Moll
(86) International application number: PCT/JP2010/053408
(87) International publication number: WO 2010/113582

(57) **Abstract**

An incoming call detection unit (102) detects an incoming call, a time discerning unit (104) uses a clock (103) to discern the time of detection of the incoming call, a response message selection unit (107) reads from schedule storage unit (105) status information that has been placed in correspondence with time information that includes the time that was discerned, a response message selection unit (107), by reading from the response message storage unit (106) the response message that is placed in correspondence with the status information that was read, selects a response message, and a response unit (108) transmits the response message that was selected to the call originator of the incoming call.

## Description

### Technical Field

The present invention relates to a portable telephone for carrying out telephone communication and to a response method and program for the portable telephone.

### Background Art

In recent years, the rate of ownership of portable telephones has become extremely high. One reason that can be offered for this popularity is that the possession of a portable telephone enables contact with the user that is not limited by, for example, the time or location of the user who possesses the portable telephone.

Nevertheless, even though a user may have a portable telephone, there are cases in which a call (a response) is not possible due to the state of the user (recipient), such as when the user is in a meeting, is driving a vehicle, or is traveling on a train. In such cases, the stratagem that is typically used is to transmit a message indicating that the user is not able to take the call to the party that made the call (call originator).

This message is usually a fixed message unrelated to the state of the user (recipient) such as "I cannot come to the phone right now," and the party that made the phone call (the call originator) is unable to learn the reason that the user (recipient) is unable to answer the call.

In response to this problem, a technology has been proposed in which a plurality of response messages are stored in a portable telephone, and upon detection of an incoming call, the plurality of messages are displayed, and the response message that is selected by the user of the portable telephone from among the displayed plurality of messages then transmitted to the call originator (for example, see Patent Document 1).

### Literature of the Prior Art

### Patent Documents

Patent Document 1: JP-A-2007-306191

### Summary of the Invention

### Problem to be Solved by the Invention

However, in technology such as disclosed in Patent Document 1, the problem remains that the response message that is to be transmitted to the call originator must be selected by the user. In other words, the problem remains that a response message cannot be selected when in a state in which operating a portable telephone is difficult, such as while engaged in a meeting or while driving a car.

It is an object of the present invention to provide a portable telephone, a response method, and a program in a portable telephone that can provide a solution to the above-described problem.

### Means for Solving the Problem

The portable telephone of the present invention includes:
an incoming call detection unit that detects an incoming call;
a clock;
a response message storage unit that stores status information of the user and response messages in association with each other;
a schedule storage unit that stores schedule information of the user in which the time information and the status information of the user are placed in correspondence;
a time discerning unit that uses the clock to discern the time at which the call detection unit detects an incoming call;
a response message selection unit that, based on the time discerned by the time discerning unit, reads from the schedule storage unit the status information that was placed in correspondence with time information that includes the time, and, by reading from the response message storage unit the response message that was placed in correspondence with the status information that was read, selects a response message; and
a response unit that transmits to the call originator of the incoming call the response message that was selected by the response message selection unit.

The response method of the present invention is a response method in a portable telephone that is equipped with a response message storage unit that stores status information of a user and response messages in association with each other, a schedule storage unit that stores schedule information of the user in which time information and status information of the user are placed in correspondence, and a clock; the response method including processes of:
detecting an incoming call to the portable telephone;
using the clock to discern the time that the incoming call was detected;
based on the time that was discerned, reading from the schedule storage unit the status information that was placed in correspondence with the time information that includes the time;
selecting a response message by reading from the response message storage unit the response message that was placed in correspondence with the status information that was read; and
transmitting the response message that was selected to the call originator of the incoming call.

The program is a program that is executed by a portable telephone that is equipped with a response message storage unit that stores status information of a user and response messages in association with each other, a schedule storage unit that stores schedule information of the user in which time information and status information of the user are placed in correspondence, and a clock; the program causing the execution of procedures of:
detecting an incoming call to the portable telephone;
using the clock to discern the time at which the incoming call was detected;
based on the time that was discerned, reading from the schedule storage unit the status information that was placed in correspondence with the time information that includes the time;
selecting a response message by reading from the response message storage unit the response message that was placed in correspondence with the status information that was read; and
transmitting the response message that was selected to the call originator of the incoming call.

### Effect of the Invention

As described hereinabove, the present invention adopts a configuration in which: an incoming call detection unit detects an incoming call; a time discerning unit uses a clock to discern the time that the incoming call was detected; a response message selection unit reads status information that is placed in correspondence with time information that includes the time that was discerned from a schedule storage unit that stores schedule information in which time information and status information of the user are placed in correspondence; the response message selection unit selects the response message by reading from a response message storage unit that stores status information of the user and response messages in association with each other the response message that was placed in correspondence with the status information that was read; and a response unit transmits the response message that was selected to the call originator of the incoming call; whereby the status of the user can be reported to the call originator without any need to operate the portable telephone in cases in which responding to an incoming call to the portable telephone is not possible.

### Brief Description of the Drawings

FIG. 1 shows the first exemplary embodiment of the portable telephone of the present invention;
FIG. 2 shows an example of the schedule information that is stored in the schedule storage unit shown in FIG. 1;
FIG. 3 shows an example of response message information that is stored in the response message storage unit shown in FIG. 1;
FIG. 4 is a flow chart for describing the response method in the first exemplary embodiment;
FIG. 5 shows the second exemplary embodiment of the portable telephone of the present invention;
FIG. 6 shows an example of the response message information that is stored in the response message storage unit shown in FIG. 5;
FIG. 7 is a flow chart for describing the response method in the second exemplary embodiment;
FIG. 8 shows the third exemplary embodiment of the portable telephone of the present invention;
FIG. 9 shows an example of the log information that is stored in the log information storage unit shown in FIG. 8;
FIG. 10 is a flow chart for describing an example of the display method of relevant log information when display of log information is requested from the user; and
FIG. 11 shows an example of log information that is displayed on the display unit shown in FIG. 8.

### Best Mode for Carrying Out the Invention

Exemplary embodiments of the present invention are next described with reference to the accompanying drawings.

### First Exemplary Embodiment

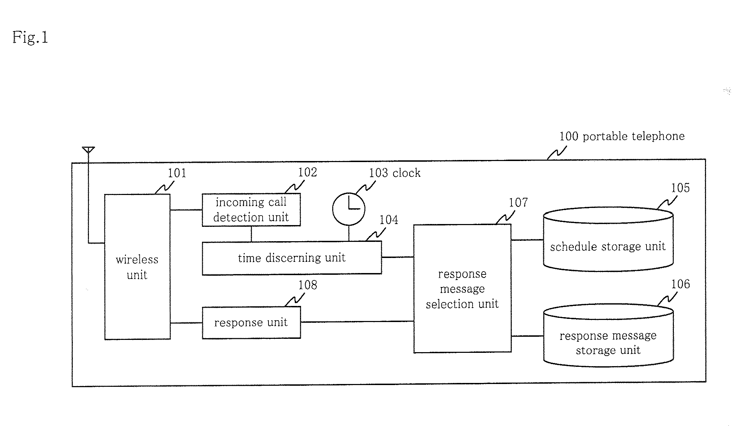

FIG. 1 shows the first exemplary embodiment of the portable telephone of the present invention.

As shown in FIG. 1, the present exemplary embodiment is portable telephone 100 made up from: wireless unit 101, incoming call detection unit 102, clock 103, time discerning unit 104, schedule storage unit 105, response message storage unit 106, response message selection unit 107, and response unit 108. Of the constituent elements of portable telephone 100, FIG. 1 shows only those constituent elements that relate to the present exemplary embodiment.

When portable telephone 100 is performing wireless communication, wireless unit 101 performs typical processes that are necessary for the wireless communication.

Incoming call detection unit 102 detects incoming calls to portable telephone 100. The method of detection may be method that is typically used. When an incoming call is detected, incoming call detection unit 102 further reports the occurrence of an incoming call to time discerning unit 104.

Clock 103 may be a typical clock and is a component capable of distinguishing the current time.

Upon notification of the occurrence of an incoming call from incoming call detection unit 102, time discerning unit 104 uses clock 103 to discern the time. Time discerning unit 104 further supplies the time that was discerned to response message selection unit 107.

Schedule storage unit 105 stores schedule information of the user that uses (possesses) portable telephone 100. This schedule information is the schedule of the user and is information in which time information and status information of the user are placed in correspondence. The schedule information is information that is set in advance from the outside.

Response message storage unit 106 stores status information that indicates states of the user who uses (possesses) portable telephone 100 in association with response messages that accord with the states as response message information. This response message information is information that is set in advance from the outside.

Based on the time that was supplied from time discerning unit 104, response message selection unit 107 reads status information that was placed in correspondence with time information that contains the time from schedule storage unit 105. Response message selection unit 107 further performs selection by reading from response message storage unit 106 the response message that is placed in correspondence with status information that was read from schedule storage unit 105. Response message selection unit 107 further supplies the response message that was selected to response unit 108.

Response unit 108 transmits the response message that was supplied from response message selection unit 107 to the call originator of the incoming call by way of wireless unit 101.

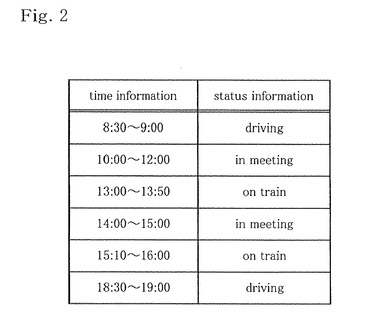

FIG. 2 shows an example of the schedule information that is stored in schedule storage unit 105 shown in FIG. 1.

As shown in FIG. 2, schedule information in which time information and status information are placed in correspondence is stored in schedule storage unit 105 shown in FIG. 1.

For example, as shown in FIG. 2, the time information "8:30-9:00" and status information "driving" are stored in association with each other. This information indicates that the user is driving a car in the interval from 8:30 to 9:00. In addition, the time information "10:00 12:00" and the status information "in meeting" are stored in association with each other. This information indicates that the user is in a meeting during the interval from 10:00 to 12:00. Still further, the time information "13:00-13:50" and the status information "on train" are stored in association with each other. This information indicates that the user is on a train during the interval from 13:00 until 13:50. The time information "14:00-15:00" and the status information "in meeting" are further stored in association with each other. This information indicates that the user is in a meeting during the interval from 14:00 to 15:00. The time information "15:10-16:00" and the status information "on train" are further stored in association with each other. This information indicates that the user is again riding on a train during the interval from 15:10 to 16:00. Still further, the time information "18:30-19:00" and the status information "driving" are stored in association with each other. This information indicates that the user is again driving a car during the interval from 18:30 to 19:00. The schedule information of the user is stored in schedule storage unit 105 in this way.

If a mechanism is provided that displays schedule information that is stored in schedule storage unit 105 according to instructions from the outside, this configuration can further be utilized as a schedule table by which the user can check a schedule.

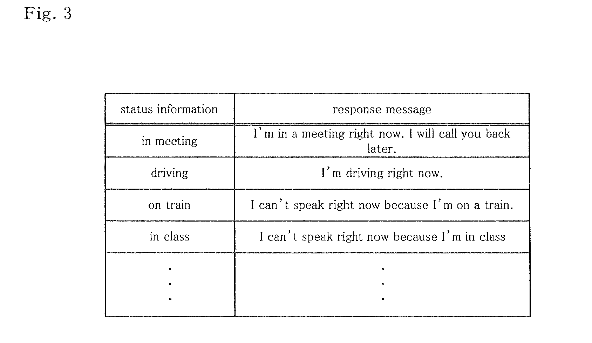

FIG. 3 shows an example of response message information that is stored in response message storage unit 106 shown in FIG. 1.

As shown in FIG. 3, response message storage unit 106 shown in FIG. 1 stores response message information in which status information and response messages are placed in correspondence with each other.

For example, as shown in FIG. 3, the status information "in meeting" and the response message "I'm in a meeting right now. I will call you back later" are stored in association with each other. This information indicates that the response message "I'm in a meeting right now. I will call you back later" will be transmitted in response to an incoming call when the user is in a meeting. In addition, the status information "driving" and the response message "I'm driving right now" are stored in association with each other. This information indicates that the response message "I'm driving right now" will be transmitted in response to an incoming call while the user is driving a car. Still further, the status information "on train" and the response message "I can't speak right now because I'm on a train." are stored in association with each other. This information indicates that the response message "I can't speak right now because I'm on a train" will be transmitted in response to an incoming call while the user is traveling on a train. Still further, the status information "in class" and the response message "I can't speak right now because I'm in class" are stored in association with each other. This information indicates that the response message "I can't speak right now because I'm in class" will be transmitted in response to an incoming call when the user is in class. In this way, response messages that accord with the states of the user are stored in response message storage unit 106.

The response method in the first exemplary embodiment is next described.

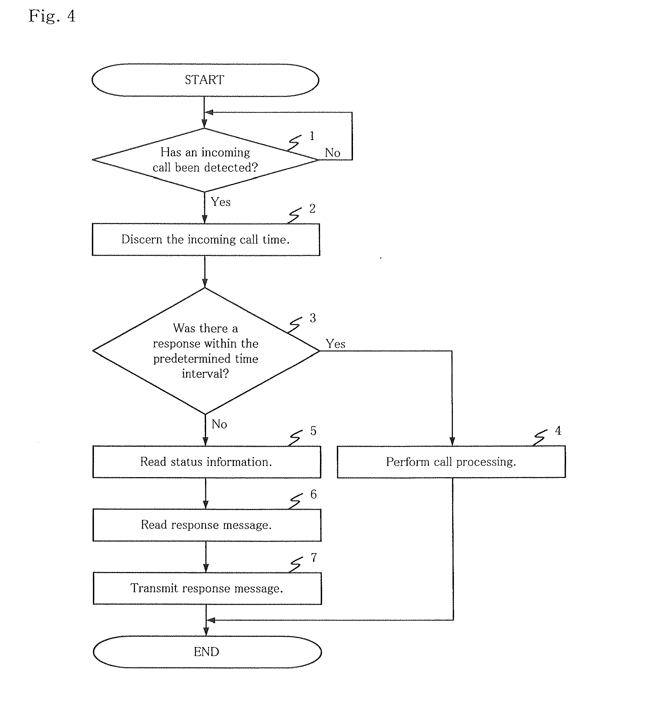

FIG. 4 is a flow chart for describing the response method in the first exemplary embodiment.

When an incoming call through wireless unit 101 is detected in incoming call detection unit 102 in Step 1, the incoming call time is discerned in time discerning unit 104 using clock 103 in Step 2.

When the incoming call time is discerned by time discerning unit 104, it is next determined in Step 3 whether there is a response within a preset interval from the incoming call time. This is a determination of whether the user responds to the incoming call.

If there is a response within a preset time interval from the incoming call time, normal call processing is carried out in Step 4.

On the other hand, if there is no response within the preset time interval from the incoming call time, status information is read from schedule storage unit 105 by response message selection unit 107 in Step 5 based on the incoming call time that was discerned by time discerning unit 104. More specifically, time information that includes the incoming call time that was discerned by time discerning unit 104 is searched from schedule storage unit 105, and status information that is stored in association with the time information that was searched is read from schedule storage unit 105. For example, when the incoming call time that was discerned by time discerning unit 104 is 8:40, time information in which 8:40 is included is searched from schedule storage unit 105. When the schedule information shown in FIG. 2 is stored in schedule storage unit 105, the time information that includes 8:40 is "8:30-9:00," and the status information "driving" that is stored in association with the time information "8:30-9:00" is therefore read from schedule storage unit 105.

Next, based on the status information that was read by response message selection unit 107 in Step 5, the response message is read from response message storage unit 106 in Step 6. For example, when the response message information shown in FIG. 3 is stored in response message storage unit 106 and the status information that is read by response message selection unit 107 in Step 5 is "driving," the response message "I'm driving right now" that is stored in association with the status information "driving" is read from response message storage unit 106.

The response message that is read from response message storage unit 106 is supplied to response unit 108 from response message selection unit 107. The response message that was supplied from response message selection unit 107 is then transmitted from response unit 108 to the call originator by way of wireless unit 101 in Step 7.

A configuration in which the process of Step 3 is not carried out is also possible. Such a configuration can be realized by carrying out a predetermined setting in advance (such as setting the portable telephone to "polite mode" before boarding a train). In this case, when an incoming call is detected and the incoming call time is discerned, the process of Step 5 is carried out without waiting for the passage of the preset time interval.

Alternatively, a configuration is also possible in which a preset response message is transmitted when time information that includes the incoming call time that was discerned by time discerning unit 104 is not stored in schedule storage unit 105.

### Second Exemplary Embodiment

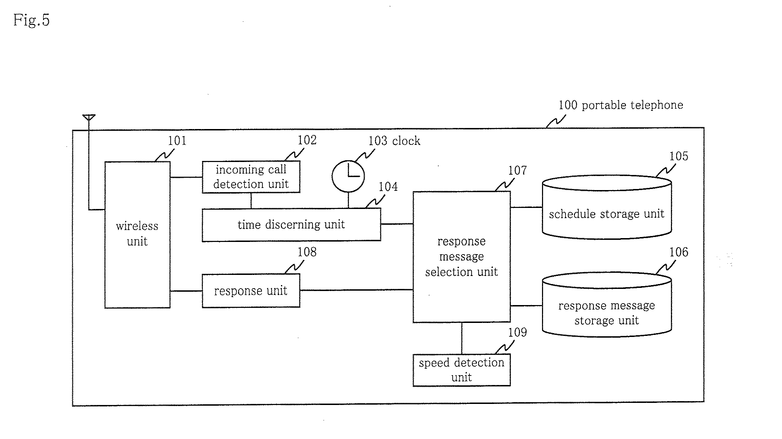

FIG. 5 shows the second exemplary embodiment of the portable telephone of the present invention.

As shown in FIG. 5, the present exemplary embodiment is made up from: wireless unit 101, incoming call detection unit 102, clock 103, time discerning unit 104, schedule storage unit 105, response message storage unit 106, response message selection unit 107, response unit 108, and speed detection unit 109. The present exemplary embodiment is of a form in which speed detection unit 109 is added to the constituent elements shown in FIG. 1. In FIG. 5, only those constituent elements of portable telephone 100 that relate to the present exemplary embodiment are shown.

Wireless unit 101, incoming call detection unit 102, clock 103, time discerning unit 104, schedule storage unit 105, and response unit 108 are the same as the components shown in FIG. 1.

Speed detection unit 109 detects the speed of movement of portable telephone 100. Speed detection unit 109 may be a typical speed sensor. Speed detection unit 109 supplies the speed that was detected to response message selection unit 107.

Response message storage unit 106 stores status information that indicates the state of the user who uses (possesses) portable telephone 100, speed information of portable telephone 100, and response messages that accord with these items of information in association with each other as response message information. The response message information is set in advance from the outside.

Based on the time supplied from time discerning unit 104, response message selection unit 107 reads from schedule storage unit 105 the status information that is placed in correspondence with the time information that includes the time. Response message selection unit 107 performs selection by reading from response message storage unit 106 the response message that is placed in correspondence with the status information that was read from schedule storage unit 105 and the speed information that includes the speed that was supplied from speed detection unit 109. In addition, response message selection unit 107 supplies the response message that was selected to response unit 108.

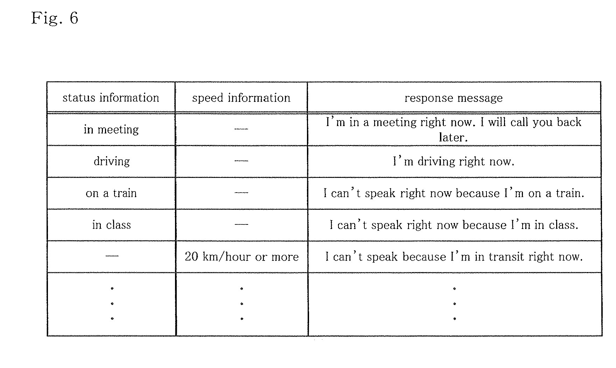

FIG. 6 shows an example of the response message information that is stored in response message storage unit 106 shown in FIG. 5.

As shown in FIG. 6, response message storage unit 106 that is shown in FIG. 5 stores response message information in which status information, speed information, and response messages are placed in association with each other.

For example, as shown in FIG. 6, the status information "in meeting" and the response message "I'm in a meeting right now. I will call you back later." are stored in association with each other. This information indicates that the response message "I'm in a meeting right now. I will call you back later." will be transmitted in response to an incoming call when the user is in a meeting. In addition, the status information "driving" and the response message "I'm driving right now" are stored in association with each other. This information indicates that the response message "I'm driving right now" will be transmitted in response to an incoming call while the user is driving a car. Still further, the status information "on a train" and the response message "I can't speak right now because I'm on a train" are stored in association with each other. This information indicates that the response message "I can't speak right now because I'm on a train" will be transmitted in response to an incoming call when the user is traveling on a train. Still further, the status information "in class" and the response message "I can't speak right now because I'm in class" are stored in association with each other. This information indicates that the response message "I can't speak right now because I'm in class" will be transmitted in response to an incoming call when the user is in class. The speed information "20 km/hour or more" and the response message "I can't speak because I'm in transit right now" are stored in association with each other. This information indicates that the response message "I can't speak because I'm in transit right now" will be transmitted in response to an incoming call when portable telephone 100, i.e., the user, is moving at a speed of 20 km/hour or more. In this way, response messages that accord with the state and speed of movement of the user are stored in response message storage unit 106. In FIG. 6, a case is shown by way of example in which one item of status information or one item of speed information is stored as information that corresponds to each of the response messages, but a case in which both status information and speed information are stored is also possible. In addition, the speed information may also set a plurality of stages such as "20 km/hour or more" and "10 km/hour or more but less than 20 km/hour."

The response method in the second exemplary embodiment is next described.

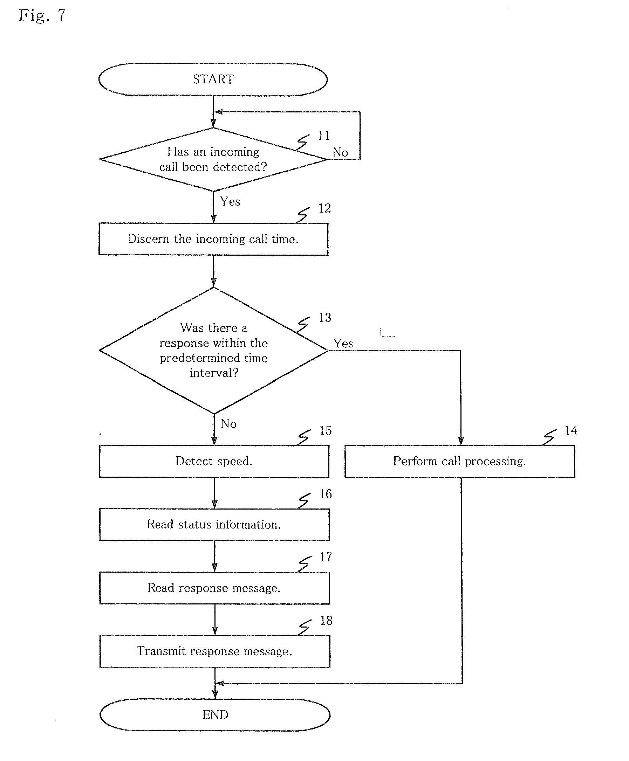

FIG. 7 is a flow chart for describing the response method in the second exemplary embodiment.

When an incoming call by way of wireless unit 101 is detected in incoming call detection unit 102 in Step 11, the incoming call time is discerned by using clock 103 in time discerning unit 104 in Step 12.

When the incoming call time is discerned in time discerning unit 104, it is next determined in Step 13 whether there is a response within a preset time interval from the incoming call time. This is a determination of whether the user responds to the incoming call.

If there is a response within the preset time interval from the incoming call time, normal call processing is carried out in Step 14.

On the other hand, if there is no response within the preset time interval from the incoming call time, the speed that was detected in speed detection unit 109 is supplied to response message selection unit 107 in Step 15.

Based on the incoming call time that was discerned by time discerning unit 104, status information is read from schedule storage unit 105 by response message selection unit 107 in Step 16. More specifically, time information that includes the incoming call time that was discerned by time discerning unit 104 is searched from schedule storage unit 105, and status information that was stored in association with the time information that was searched is read from schedule storage unit 105. For example, when the incoming call time that was discerned by time discerning unit 104 is "8:40," the time information that includes "8:40" is searched from schedule storage unit 105. When the schedule information shown in FIG. 2 is stored in schedule storage unit 105, the time information that includes "8:40" is "8:30-9:00," and the status information "driving" that is stored in association with the time information "8:30-9:00" is therefore read from schedule storage unit 105.

Next, based on the status information that was read by response message selection unit 107 in Step 16 and the speed that was supplied from speed detection unit 109 in Step 15, a response message is read from response message storage unit 106 in Step 17. For example, assuming the response message information shown in FIG. 6 is stored in response message storage unit 106, when the status information that is read by response message selection unit 107 in Step 16 is "driving," the response message "I'm driving right now" that is stored in association with the status information "driving" is read from response message storage unit 106. Alternatively, when the speed that is supplied from speed detection unit 109 is 30 km/hour, the response message "I can't speak right now because I'm in transit" that is stored in association with the speed information "20 km/hour or more" is read from response message storage unit 106.

When selecting these response messages, both status information and speed information may be considered, or either one may be given priority. When one is prioritized, either one may be prioritized. For example, when the status information is "driving" and the speed that is supplied from speed detection unit 109 is 40 km/hour, the response message "I'm driving right now" that is placed in association with the status information "driving" may be selected, or the response message "I can't speak right now because I'm in transit" that is placed in association with the speed information "20 km/hour or more" may be selected.

The response message that is read from response message storage unit 106 is supplied from response message selection unit 107 to response unit 108. The response message that was supplied from response message selection unit 107 is then transmitted from response unit 108 to the call originator by way of wireless unit 101 in Step 18.

A form is also possible in which the process of Step 13 is not carried out. As in the first exemplary embodiment, this form can be realized by making a predetermined setting in advance (such as, typically, setting the portable telephone to a "polite mode" before boarding a train). When an incoming call is detected and the incoming call time is discerned in this case, the process of Step 15 is carried out without waiting for the passage of the time interval that was set in advance.

Alternatively, a form is also possible in which a response message that was set in advance is transmitted when time information that includes the incoming call time that was discerned in time discerning unit 104 is not stored in schedule storage unit 105 or when speed information that includes the speed that was detected by speed detection unit 109 is not stored in response message storage unit 106.

### Third Exemplary Embodiment

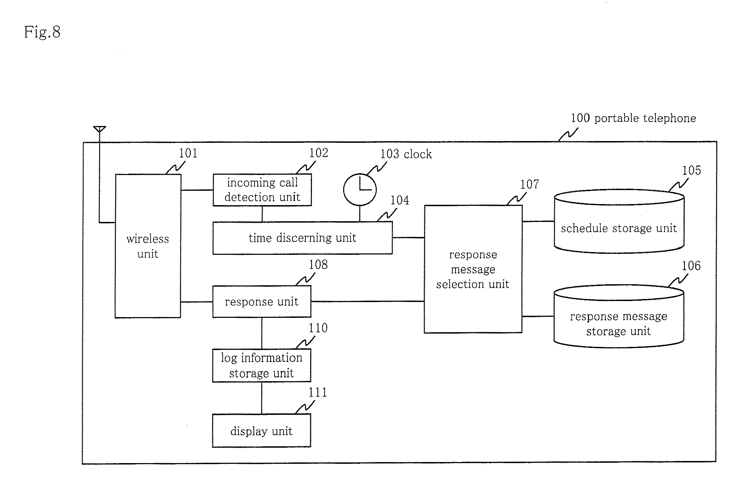

FIG. 8 shows the third exemplary embodiment of the portable telephone of the present invention.

As shown in FIG. 8, the present exemplary embodiment is made up from: wireless unit 101, incoming call detection unit 102, clock 103, time discerning unit 104, schedule storage unit 105, response message storage unit 106, response message selection unit 107, response unit 108, log information storage unit 110, and display unit 111. The present exemplary embodiment is of a form in which log information storage unit 110 and display unit 111 are added to the constituent elements shown in FIG. 1. FIG. 8 shows only those constituent elements of portable telephone 100 that relate to the present exemplary embodiment.

Wireless unit 101, incoming call detection unit 102, clock 103, time discerning unit 104, schedule storage unit 105, response message storage unit 106, and response message selection unit 107 are the same as the components shown in FIG. 1.

Response unit 108 transmits a response message that was supplied from response message selection unit 107 to the call originator of the incoming call by way of wireless unit 101. In addition, response unit 108 stores the response message that was transmitted, the incoming call time, and the telephone number of the call originator of the incoming call (the transmission destination of the response message) in log information storage unit 110.

Log information storage unit 110 stores the response message that was transmitted, the incoming call time, and the telephone number of the call originator of the incoming call (the transmission destination of the response message) in association with each other as log information.

Display unit 111 displays the log information that is stored by log information storage unit 110. Display unit 111 should be a component that can display information and may be the display that is provided in a typical portable telephone.

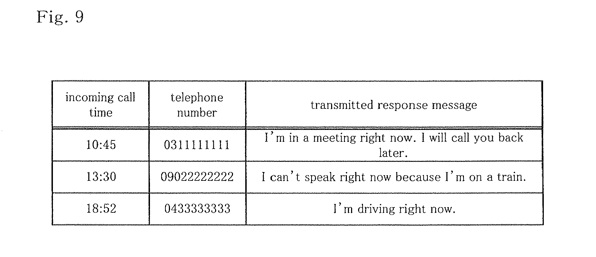

FIG. 9 shows an example of the log information that is stored in log information storage unit 110 shown in FIG. 8.

As shown in FIG. 9, log information storage unit 110 shown in FIG. 8 stores log information in which the incoming call time, the telephone number of the call originator of the incoming call (the transmission destination of the response message), and the transmitted response message that was transmitted are stored in association with each other.

For example, as shown in FIG. 9, the incoming call time "10:45," the telephone number "0311111111," and the transmitted response message "I'm in a meeting right now. I will call you back later" are stored in association with each other as log information. This information indicates that the response message "I'm in a meeting right now. I will call you back later" was transmitted in response to an incoming call at 10:45 from the telephone number "0311111111." In addition, the incoming call time "13:30," the telephone number "09022222222," and the transmitted response message "I can't speak right now because I'm on a train" are stored in association with each other as log information. This information indicates that the response message "I can't speak right now because I'm on a train" was transmitted in response to an incoming call at 13:30 from the telephone number "09022222222." In addition, the incoming call time "18:52," the telephone number "0433333333," and the transmitted response message "I'm driving right now" are stored in association with each other as log information. This information indicates that the response message "I'm driving right now" was transmitted in response to an incoming call of 18:52 from the telephone number "0433333333." In this way, the transmission log information of response messages is stored in log information storage unit 110.

The log information that is stored in log information storage unit 110 in this way is displayed on display unit 111. The timing of the display of log information on display unit 111 is not particularly prescribed. For example, a form is possible in which the log information is displayed on display unit 111 when there is a display request from the user.

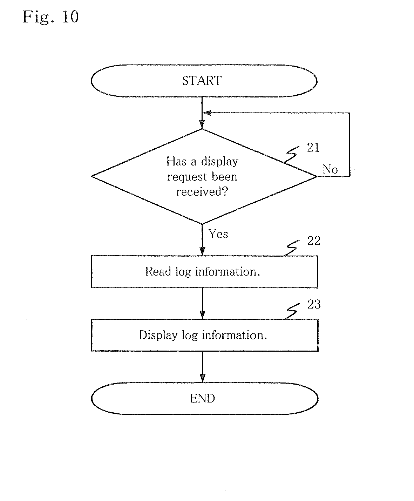

FIG. 10 is a flow chart for describing an example of the display method of relevant log information when the display of log information is requested from the user.

When a request to display log information is received from the user in Step 21, the log information is read from log information storage unit 110 in Step 22. In this case, the reception of a display request from the user is realized by the reception of the input of a request for display by, for example, predetermined key input.

Log information that is read is then displayed on display unit 111 in Step 23.

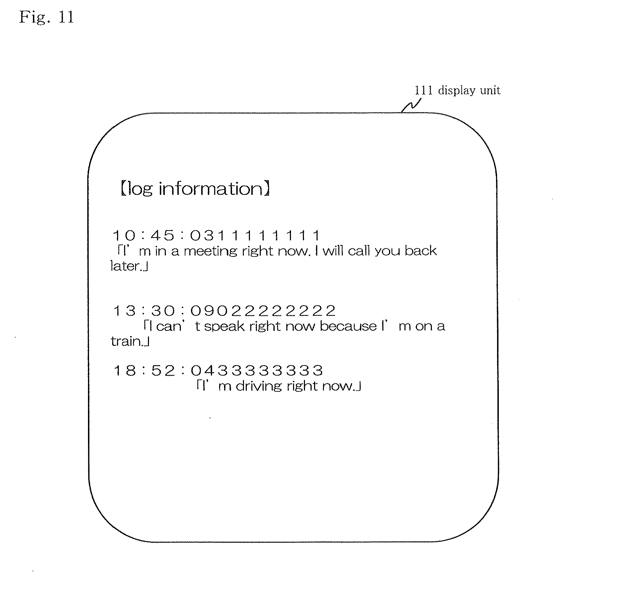

FIG. 11 shows an example of the log information that is displayed on display unit 111 shown in FIG. 8.

As shown in FIG. 11, the log information that is read from log information storage unit 110 is displayed on display unit 111.

This log information may be information that is stored in an outside device (such as a server) and not information that is stored in portable telephone 100. In such cases, a configuration is possible in which the log information is transmitted from this device and the log information that was transmitted is then displayed on display unit 111 when the user has returned to a state that allows operation of portable telephone 100.

The processes of portable telephone 100 that were described in the first to third exemplary embodiments may be carried out by logical circuits that are fabricated according to the object. Alternatively, a program that describes the processing content as procedures may be recorded on a recording medium that can be read in portable telephone 100, and the program that was recorded on this recording medium may then be read to and executed by portable telephone 100. The recording medium that can be read in portable telephone 100 refers to, in addition to a relocateable recording medium such as a floppy disk (registered trademark), a magneto-optical disk, a DVD, or a CD, memory such as ROM or RAM or an HDD that is incorporated in portable telephone 100. The program that is recorded on this recording medium is read to a CPU (not shown) in portable telephone 100, and processes equivalent to those described hereinabove are carried out under the control of the CPU. In this case, the CPU is a component that operates as a computer that executes the program that is read from the recording medium on which the program was recorded.

According to the forms described hereinabove, the state of a user can be reported to a call originator without operation of the portable telephone 100 even in cases in which a response to an incoming call to portable telephone 100 is not possible.

Although the invention of the present application has been described with reference to exemplary embodiments, the invention of the present application is not limited to the above-described exemplary embodiments. The composition and details of the invention of the present application is open to various modifications within the scope of the invention of the present application that will be clear to one of ordinary skill in the art.

This application claims the benefits of priority based on Japanese Patent Application No. 2009-090110 for which application was submitted on April 2, 2009 and incorporates by citation all of the disclosures of that application.

## Claims

1. A portable telephone comprising:
an incoming call detection unit that detects an incoming call;
a clock;
a response message storage unit that stores status information of a user and response messages in association with each other;
a schedule storage unit that stores schedule information of said user in which time information and said status information of the user are placed in correspondence;
a time discerning unit that uses said clock to discern the time at which said call detection unit detects an incoming call;
a response message selection unit that, based on a time discerned by said time discerning unit, reads from said schedule storage unit said status information that was placed in correspondence with time information that includes the time, and, by reading from said response message storage unit the response message that was placed in correspondence with the status information that was read, selects the response message; and
a response unit that transmits the response message that was selected by said response message selection unit to the call originator of said incoming call.

2. The portable telephone as set forth in claim 1, wherein said response message selection unit does not read said status information from said schedule storage unit when there is a response by said user within a predetermined time interval from the detection of an incoming call by said incoming call detection unit.

3. The portable telephone as set forth in claim 2, wherein said response message selection unit selects a predetermined response message when time information that includes the time discerned by said time discerning unit is not stored in said schedule storage unit.

4. The portable telephone as set forth in claim 1, further comprising a speed detection unit that detects the speed of movement of the portable telephone; wherein:
said response message storage unit further stores response messages and speed information in association with each other; and
said response message selection unit, based on the speed that was detected by said speed detection unit, reads from said response message storage unit the response message that is placed in correspondence with speed information that accords with the speed to select the response message.

5. The portable telephone as set forth in any one of claims 1 to 4, further comprising:
a log information storage unit that stores, as log information, response messages that were transmitted by said response unit, the times at which the response messages were transmitted, and the telephone numbers of the transmission destinations of the response messages in association with each other; and
a display unit that displays log information that was stored in said log information storage unit.

6. A response method in a portable telephone that is equipped with a response message storage unit that stores status information of a user and response messages in association with each other, a schedule storage unit that stores schedule information of said user in which time information and status information of said user are placed in correspondence, and a clock; said response method including processes of:
detecting an incoming call to the portable telephone;
using said clock to discern the time that said incoming call was detected;
based on said time that was discerned, reading from said schedule storage unit said status information that was placed in correspondence with time information that includes said time;
selecting a response message by reading from said response message storage unit the response message that was placed in correspondence with said status information that was read; and
transmitting said response message that was selected to the call originator of said incoming call.

7. The response method as set forth in claim 6, further comprising a process of reading said status information from said schedule storage unit when there is no response by said user within a predetermined time interval from detecting said incoming call.

8. The response method as set forth in claim 7, further comprising a process of selecting a predetermined response message when time information that includes said discerned time is not stored in said schedule storage unit.

9. The response method as set forth in claim 6, wherein said response message storage unit further stores response messages and speed information in association with each other, said response method further comprising processes of:
detecting the speed of movement of the portable telephone; and
based on said speed that was detected, selecting a response message by reading from said response message storage unit the response message that is placed in correspondence with the speed information that accords with the speed.

10. The response method as set forth in any one of claims 6 to 9, further comprising processes of:
storing, as log information, said transmitted response messages, the times at which said response messages were transmitted, and the telephone numbers of the transmission destinations of the response messages in association with each other; and
displaying said log information that is stored.

11. A program that is executed by a portable telephone that is equipped with a response message storage unit that stores status information of a user and response messages in association with each other, a schedule storage unit that stores schedule information of said user in which time information and status information of said user are placed in correspondence, and a clock; the program causing the execution of procedures of:
detecting an incoming call to the portable telephone;
using said clock to discern the time that said incoming call was detected;
based on said time that was discerned, reading from said schedule storage unit said status information that was placed in correspondence with time information that includes said time;
selecting a response message by reading from said response message storage unit the response message that was placed in correspondence with said status information that was read; and
transmitting said response message that was selected to the call originator of said incoming call.

12. The program as set forth in claim 11, said program further causing the execution of a procedure of reading from said schedule storage unit said status information when there is no response by said user within a predetermined time interval from detecting said incoming call.

13. The program as set forth in claim 12, said program further causing the execution of a procedure of selecting a predetermined response message when time information that includes said discerned time is not stored in said schedule storage unit.

14. The program as set forth in claim 11, wherein said response message storage unit further stores response messages and speed information in association with each other; said program further causing the execution of procedures of:
detecting the speed of movement of the portable telephone; and based on said speed that was detected, selecting the response message by reading from said response message storage unit the response message that is placed in correspondence with speed information that accords with the speed.

15. The program as set forth in any one of claims 11 to 14, said program further causing the execution of procedures of:
storing, as log information, said transmitted response messages, the times at which said response messages were transmitted, and the telephone numbers of the transmission destinations of the response messages in association with each other; and
displaying said log information that is stored.
